# FASCICULE DE BREVET EUROPEEN

(11) **EP 3 417 535 B1**
(45) Date de publication et mention de la délivrance du brevet: **14.10.2020**
(21) Numéro de dépôt: 17706576.0
(22) Date de dépôt: 26.01.2017
(51) Int. Cl.: H02M 1/32, B60L 3/00, H04L 1/22, H02P 29/024

(54) **DISPOSITIF DE COMMANDE D'UN ONDULEUR ET SYSTEME ELECTRIQUE COMPORTANT UN TEL DISPOSITIF DE COMMANDE**
VORRICHTUNG ZUR STEUERUNG EINES UMRICHTERS UND ELEKTRISCHES SYSTEM MIT SOLCH EINER STEUERUNGSVORRICHTUNG
DEVICE FOR CONTROLLING AN INVERTER AND ELECTRICAL SYSTEM INCLUDING SUCH A CONTROLLING DEVICE

(30) Priorité: 17.02.2016 FR 1651272
(43) Date de publication de la demande: 26.12.2018
(73) Titulaire: Valeo Systèmes de Contrôle Moteur, 95800 Cergy Saint Christophe (FR)
(72) Inventeur: COIA, Nathalie, BP 68532 Cedex 95892 CERGY PONTOISE (FR)
(86) Numéro de dépôt international: PCT/FR2017/050180
(87) Numéro de publication internationale: WO 2017/140964

(56) Documents cités:
- JP-A- H0 315 263
- US-A- 4 583 224
- US-A1- 2003 007 375
- US-A1- 2009 296 433

## Description

### DOMAINE TECHNIQUE

La présente invention concerne la commande des onduleurs connectant une source de tension à une machine électrique.

Dans la description et les revendications qui vont suivre, le terme de « connexion » (au singulier) est utilisé de manière générique pour désigner tout type de connexion, en particulier pouvant être réalisée au moyen d'une ou plusieurs connexions physiques, par exemple au sens d'un ou plusieurs conducteurs.

En outre, lorsqu'il sera indiqué qu'un premier élément « surveille » un deuxième élément, cela signifie par exemple que le premier élément est destiné à jouer le rôle d'un « chien de garde » (de l'anglais *« watchdog »*) du deuxième élément. À cette fin, le premier élément est par exemple configuré pour envoyer un signal de surveillance au deuxième élément. Le deuxième élément est alors configuré pour répondre à ce signal de surveillance par un signal prédéterminé, appelé signal d'activité normale. Le premier élément est alors configuré pour comparer le signal d'activité normale reçu avec un signal attendu. En cas d'absence du signal d'activité normale ou bien si le signal d'activité normale est différent du signal attendu, le premier élément est configuré pour conclure que le deuxième élément est défaillant. Par exemple, le signal de surveillance est un signal à modulation de largeur d'impulsion de rapport cyclique prédéterminé. Alternativement, le premier élément pourrait ne pas envoyer de signal de surveillance. Dans ce cas, deuxième élément pourrait être configuré pour envoyer un signal d'activité normale à des instants prédéterminés, connus du premier élément. De même que précédemment, en cas d'absence du signal d'activité normale à l'instant prédéterminé ou bien si le signal d'activité normale est différent du signal attendu, le premier élément est configuré pour conclure que le deuxième élément est défaillant.

### ARRIÈRE-PLAN TECHNOLOGIQUE

La demande PCT/FR2014/050340 publiée sous le numéro WO 2014/128401 A2 décrit un dispositif de commande d'un onduleur ayant des bras de commutation associés chacun à au moins une extrémité de bobine d'une machine électrique, chaque bras de commutation présentant : un interrupteur de côté haut destiné à être sélectivement fermé pour connecter l'extrémité à une borne positive d'une batterie et ouvert pour déconnecter l'extrémité de la borne positive de la batterie, et un interrupteur de côté bas destiné à être sélectivement fermé pour connecter l'extrémité à une borne négative de la batterie et ouvert pour déconnecter l'extrémité de la borne négative de la batterie, le dispositif de commande comportant :
- un premier pilote configuré pour piloter au moins un premier interrupteur suivant des commandes d'ouverture/fermeture,
- N circuits électroniques, N étant supérieur ou égal à trois, l'un des circuits électroniques étant configuré pour envoyer au premier pilote les commandes d'ouverture/fermeture des premiers interrupteurs.

L'invention a pour but de proposer un circuit de commande de l'onduleur présentant un nombre réduit de circuits électroniques, sans trop impacter la robustesse du circuit de commande face à la défaillance d'un de ses circuits électroniques.

### RÉSUMÉ DE L'INVENTION

À cet effet, il est proposé un dispositif de commande d'un onduleur ayant des bras de commutation associés chacun à au moins une extrémité de bobine d'une machine électrique, chaque bras de commutation présentant : un interrupteur de côté haut destiné à être sélectivement fermé pour connecter l'extrémité à une borne positive d'une batterie et ouvert pour déconnecter l'extrémité de la borne positive de la batterie, et un interrupteur de côté bas destiné à être sélectivement fermé pour connecter l'extrémité à une borne négative de la batterie et ouvert pour déconnecter l'extrémité de la borne négative de la batterie, le dispositif de commande comportant :
- un premier pilote configuré pour piloter au moins un premier interrupteur suivant des commandes d'ouverture/fermeture reçues,
- N circuits électroniques, N étant supérieur ou égal à trois, l'un des circuits électroniques étant configuré pour envoyer au premier pilote les commandes d'ouverture/ fermeture,
le dispositif de commande étant caractérisé en ce que le premier pilote est en outre configuré pour, en cas de réception d'une commande de désactivation, ignorer les commandes d'ouverture/fermeture reçues et fournir à chaque premier interrupteur un signal prédéterminé d'ouverture ou de fermeture,
en ce que chacun des N circuits électroniques est configuré pour envoyer une commande de désactivation du premier pilote,
et en ce qu'il comporte en outre :
- un circuit électronique de sélection configuré pour :
   - recevoir les commandes de désactivation envoyées par les N circuits électroniques, et
   - si des commandes de désactivation ont été reçues de la part d'au moins M circuits électroniques, M étant supérieur à N/2, transférer au premier pilote la commande de désactivation.

En effet, il apparaît qu'il existe deux moyens pour contrôler le ou les premiers interrupteurs au travers du premier pilote : soit par les commandes d'ouverture/fermeture, soit par la commande de désactivation. Pour s'assurer qu'une défaillance d'un circuit électronique ne rende pas incontrôlable le premier pilote, il faudrait en théorie prévoir deux composants électroniques : un premier envoyant les commandes d'ouverture/fermeture, et un deuxième envoyant la commande de désactivation. Ainsi, si l'un de ces deux circuits électroniques subissait une défaillance, il serait toujours possible de commander le premier pilote, et donc le ou les premiers interrupteurs, de manière prévisible grâce à l'autre circuit électronique. Or, dans la présente invention, un unique circuit électronique envoie à la fois les commandes d'ouverture/fermeture et la commande de désactivation. Cette solution permet de réduire le nombre de circuits électroniques du dispositif de commande. Cependant, grâce à la présence du circuit électronique de sélection, même si cet unique circuit électronique subit une défaillance, il est toujours possible de commander le premier pilote pour le désactiver et donc de placer le ou les premiers interrupteurs dans un état prévisible. Or, la fonction réalisée par le circuit électronique de sélection peut être réalisée très simplement, à un coût très faible, de sorte que l'utilisation d'un unique circuit électronique envoyant à la fois les commandes d'ouverture/fermeture et la commande de désactivation associé à un circuit électronique de sélection est économiquement plus intéressant que l'utilisation de deux circuits électroniques pour envoyer respectivement les commandes d'ouverture/fermeture et la commande de désactivation.

De façon optionnelle, M est égal à la majorité des circuits électroniques.

De façon optionnelle également, M est égal à N-1.

De façon optionnelle également, les circuits électroniques sont en nombre impair.

De façon optionnelle également, les circuits électroniques sont au nombre de trois.

De façon optionnelle également, le circuit électronique de sélection est implémenté uniquement avec des composants analogiques.

De façon optionnelle également, le premier pilote est configuré pour piloter plusieurs premiers interrupteurs qui sont tous d'un même premier côté parmi le côté haut et le côté bas.

De façon optionnelle également, les premiers interrupteurs sont tous les interrupteurs d'un même premier côté parmi le côté haut et le côté bas.

De façon optionnelle également, le premier côté est le côté bas.

De façon optionnelle également, le dispositif de commande comporte en outre un deuxième pilote configuré pour piloter des deuxièmes interrupteurs d'un deuxième côté parmi le côté haut et le côté bas, suivant des commandes d'ouverture/fermeture reçues et pour, en cas de réception d'une commande de désactivation, ignorer les commandes d'ouverture/fermeture reçues et fournir à chaque deuxième interrupteur un signal prédéterminé d'ouverture ou de fermeture.

De façon optionnelle également, un premier des circuits électroniques est configuré pour surveiller un deuxième des circuits électroniques et, lorsqu'une défaillance du deuxième circuit électronique est détectée, pour envoyer au circuit électronique de sélection une commande de désactivation du premier pilote, le deuxième circuit électronique est configuré pour surveiller le premier circuit électronique et un troisième des circuits électroniques et, lorsqu'une défaillance du premier circuit électronique ou du troisième circuit électronique est détectée, pour envoyer au premier pilote des commandes de fermeture des premiers interrupteurs et, lorsqu'une défaillance du troisième circuit électronique est détectée, pour envoyer en outre au premier circuit électronique une demande de désactivation du deuxième pilote, et le troisième circuit électronique est configuré pour surveiller le deuxième circuit électronique et, lorsqu'une défaillance du deuxième circuit électronique est détectée, pour, d'une part, envoyer au deuxième pilote des commandes de fermeture des deuxièmes interrupteurs et, d'autre part, envoyer au circuit électronique de sélection une commande de désactivation du premier pilote.

De façon optionnelle également, le premier circuit électronique est configuré pour déterminer des commandes d'ouverture/fermeture des premiers interrupteurs et des commandes d'ouverture/fermeture des deuxièmes interrupteurs et pour envoyer au deuxième composant électronique les commandes d'ouverture/fermeture des interrupteurs déterminées, le deuxième circuit électronique est configuré pour mettre en forme les commandes d'ouverture/fermeture des interrupteurs, pour envoyer au troisième circuit électronique, après leur mise en forme, les commandes d'ouverture/fermeture des deuxièmes interrupteurs et pour envoyer au premier pilote, après leur mise en forme, les commandes d'ouverture/fermeture des premiers interrupteurs, et le troisième circuit électronique est configuré pour transférer les commandes d'ouverture/fermeture des deuxièmes interrupteurs reçues du deuxième circuit électronique jusqu'au deuxième pilote.

Il est également proposé un système électrique comportant :
- une machine électrique comportant des bobines présentant chacune deux extrémités,
- un onduleur ayant des bras de commutation associés chacun à au moins une extrémité de bobine de la machine électrique, chaque bras de commutation présentant : un interrupteur de côté haut destiné à être sélectivement fermé pour connecter l'extrémité à une borne positive d'une batterie et ouvert pour déconnecter l'extrémité de la borne positive de la batterie (108), et un interrupteur de côté bas destiné à être sélectivement fermé pour connecter l'extrémité à une borne négative de la batterie et ouvert pour déconnecter l'extrémité de la borne négative de la batterie,
- un dispositif de commande de l'onduleur selon l'invention.

De façon optionnelle, la machine électrique comporte trois bobines et l'onduleur comporte six bras de commutation respectivement associés aux six extrémités des bobines.

De façon optionnelle également, la machine électrique comporte trois bobines connectées entre elles en étoile par des premières extrémités, et l'onduleur comporte trois bras de commutation respectivement associés aux trois autres extrémités des bobines.

De façon optionnelle également, la machine électrique comporte trois bobines connectées entre elles en triangle, et l'onduleur comporte trois bras de commutation respectivement associés aux trois paires d'extrémités des bobines formant les trois pointes du triangle.

De façon optionnelle également, la machine électrique est une machine électrique synchrone à aimants permanents.

### DESCRIPTION DES FIGURES

La figure 1 est un schéma électrique d'un système électrique mettant en œuvre l'invention.
La figure 2 un schéma électrique d'un comparateur du système électrique de la figure 1.

### DESCRIPTION DÉTAILLÉE

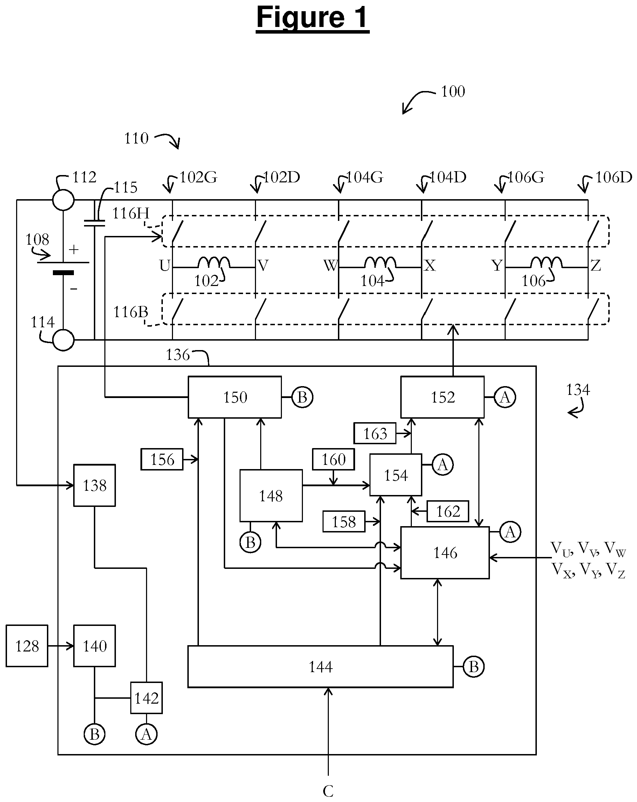

En référence à la figure 1, un système électrique 100 mettant en œuvre l'invention va à présent être décrit.

Le système électrique 100 comporte tout d'abord une machine électrique synchrone à aimants permanents comportant trois bobines 102, 104, 106 (également appelées « phases ») présentant chacune deux extrémités. ROUES DU VEHICULE

Le système électrique 100 comporte en outre une première source d'énergie électrique 108. Dans l'exemple décrit, la première source d'énergie électrique 108 est une batterie, par exemple une batterie au lithium, présentant une borne positive (+) et une borne négative (-) et délivrant une tension par exemple comprise entre 400 V et 800 V entre ses bornes.

Le système électrique 100 comporte en outre un onduleur 110 connectant la batterie 108 aux bobines 102, 104, 106 de la machine électrique.

L'onduleur 110 comporte une borne de côté haut 112 et une borne de côté bas 114, respectivement connectées à la borne positive (+) et à la borne négative (-) de la batterie 108, dans l'exemple décrit via une capacité 115.

L'onduleur 110 comporte en outre six bras de commutation 102G, 102D, 104G, 104D, 106G, 106D associés respectivement aux six extrémités des bobines 102, 104, 106. Chaque bras de commutation 102G, 102D, 104G, 104D, 106G, 106D présente un interrupteur de côté haut (les interrupteurs de côté haut étant désignés collectivement par la référence 116H) et un interrupteur de côté bas (les interrupteurs de côté bas étant désignés collectivement par la référence 116B) connecté l'un à l'autre en un point milieu U, V, W, X, Y, Z connecté à l'extrémité de bobine considérée.

Les interrupteurs 116H, 116B sont des interrupteurs pilotables, par exemple destinés à se voir appliquer une tension inférieure à 5V (négative de préférence) pour prendre un état (par exemple l'état ouvert) et une tension comprise entre 12 V et 22 V pour prendre l'autre état (par exemple l'état fermé). Les interrupteurs 116H, 116B sont de préférence de type « normalement ouvert » c'est-à-dire qu'ils sont à l'état ouvert en l'absence de pilotage (tension appliquée inférieure à 5V, négative de préférence).

Les interrupteurs 116H, 116B sont par exemple des transistors à effet de champ à grille isolée (de l'anglais « Metal Oxide Semiconductor Field Effect Transistor »*,* ou MOSFET) ou bien des transistors bipolaire à grille isolée (de l'anglais « Insulated Gate Bipolar Transistor »*,* ou IGBT). Comme cela est connu en soit, des diodes de roue libre (non représentées) sont de préférence montées en parallèle des interrupteurs 116H, 116B.

Chacun des interrupteurs de côté haut 116H est destiné à être sélectivement fermé et ouvert pour respectivement connecter et déconnecter l'extrémité de bobine respective de la borne de côté haut 112. De manière similaire, chacun des interrupteurs de côté bas 116B est destiné à être sélectivement fermé et ouvert pour respectivement connecter et déconnecter l'extrémité de bobine respective de la borne de côté bas 114.

Le système électrique 100 comporte en outre une deuxième source d'énergie électrique 128, indépendante de la première source d'énergie électrique 108. Dans l'exemple décrit, la deuxième source d'énergie électrique 128 est une batterie, par exemple une batterie au plomb, délivrant une tension de 12 V entre ses bornes et destinée à alimenter des accessoires du véhicule automobile.

Le système électrique 100 comporte en outre un dispositif de commande 134 de l'onduleur 110. Le dispositif de commande 134 comporte dans l'exemple décrit une carte électronique 136 et des composants électroniques montés dessus, qui vont à présent être décrits.

Le dispositif de commande 134 comporte une première alimentation électrique 138 fonctionnant à partir de la première source d'énergie électrique 108.

Le dispositif de commande 134 comporte en outre une deuxième alimentation électrique 140 fonctionnant à partir de la deuxième source d'énergie électrique 128 et conçu pour fournir une tension d'alimentation B.

Le dispositif de commande 134 comporte en outre un combineur d'alimentation 142 conçu combiner les alimentations 138, 140 et fournir une tension d'alimentation A. Ainsi, si l'une des deux alimentations 138, 140 est défaillante, la tension d'alimentation A peut toujours être obtenue à partir de l'autre alimentation.

Le dispositif de commande 134 comporte en outre différents circuits électroniques, parmi lesquels : un microcontrôleur 144, un FPGA 146 (de l'anglais *« Field-Programmable Gate Array »*)*,* un CPLD 148 (de l'anglais « *Complex Programmable Logic Device »*), un pilote de côté haut 150, un pilote de côté bas 152, un circuit électronique de sélection 154 et des circuits électroniques de tirage 156, 158, 160, 162, 163.

Le dispositif de commande 134 comporte en outre les connexions illustrées sur la figure 1 pour les échanges de données qui seront décrits par la suite, entre les circuits électroniques.

### Microcontrôleur 144

Le microcontrôleur 144 est configuré pour recevoir, notamment, au moins l'une des entrées suivantes : une consigne de couple C, une mesure de la position du moteur, des mesures de courants dans les phases et une mesure de tension de la batterie 108, par exemple via un bus de communication série (appelé *« controller area network (CAN) »* en anglais). Le microcontrôleur 144 est en outre configuré pour déterminer des commandes d'ouverture/fermeture des interrupteurs de côté haut 116H et des commandes d'ouverture/fermeture des interrupteurs de côté bas 116B, à partir notamment des entrées précédentes. Dans l'exemple décrit, les commandes d'ouverture/fermeture sont déterminées par le microcontrôleur 144 sous la forme de rapports cycliques (en anglais: *« duty cycle »*)*.* Le microcontrôleur 144 est en outre configuré pour envoyer au FPGA 146 les commandes d'ouverture/fermeture des interrupteurs 116H, 116B déterminées.

Le microcontrôleur 144 est en outre configuré pour envoyer au pilote de côté haut 150, de manière sélective, soit une commande d'activation, soit une commande de désactivation de ce pilote de côté haut 150. Par défaut, le microcontrôleur 144 est configuré pour envoyer la commande d'activation. Le microcontrôleur 144 est en outre configuré pour recevoir, de la part du FPGA 146, une demande de désactivation du pilote de côté haut 150 et, en réponse, pour envoyer au pilote de côté haut 150 la commande de désactivation.

Il sera apprécié que, dans l'exemple décrit, le microcontrôleur 144 est directement connecté au pilote de côté haut 150 pour envoyer la commande d'activation/désactivation, c'est-à-dire que cette connexion ne passe par aucun circuit électronique logique susceptible d'interrompre la transmission de la commande et donc d'empêcher à la commande émise par le microcontrôleur 144 d'arriver au pilote de côté haut 150.

Le microcontrôleur 144 est en outre configuré pour envoyer au circuit électronique de sélection 154, de manière sélective, soit une commande d'activation, soit une commande de désactivation du pilote de côté bas 152. Par défaut, le microcontrôleur 144 est configuré pour envoyer une commande d'activation. Le microcontrôleur 144 est en outre configuré pour recevoir, de la part du FPGA 146, une demande de désactivation du pilote de côté bas 152 et, en réponse, pour envoyer au circuit électronique de sélection 154 une commande de désactivation du pilote de côté bas 152.

Le microcontrôleur 144 est en outre configuré pour surveiller le FPGA 146 et, lorsqu'une défaillance du FPGA 146 est détectée, pour envoyer au circuit électronique de sélection 154 une commande de désactivation du pilote de côté bas 152.

### FPGA 146

Le FPGA 146 est configuré pour mettre en forme les commandes d'ouverture / fermeture des interrupteurs 116H, 116B. Dans l'exemple décrit, la mise en forme de chaque commande d'un interrupteur comporte le calcul d'un signal carré, notamment une tension, présentant un niveau bas correspondant à un premier état de l'interrupteur et un niveau haut correspondant au deuxième état de l'interrupteur. Plus précisément, les commandes mises en forme sont des signaux en modulation de largeur d'impulsions (de l'anglais *« pulse width modulation »* ou PWM) calculés à partir des rapports cycliques reçus, et auxquels des temps morts ont été ajoutés. Les temps morts permettent que, lorsqu'un premier des deux interrupteurs d'un bras de commutation 102G, 102D, 104G, 104D, 106G, 106D doit être fermé tandis que le deuxième interrupteur de ce bras de commutation 102G, 102D, 104G, 104D, 106G, 106D doit être ouvert, l'ouverture du deuxième interrupteur se fasse avant la fermeture du premier. Ainsi, la mise en court-circuit de la batterie 108 est évitée. Le FPGA 146 est en outre configuré pour envoyer au CPLD 148, après leur mise en forme, les commandes d'ouverture/fermeture des interrupteurs de côté haut 116H et pour envoyer au pilote de côté bas 152, après leur mise en forme, les commandes d'ouverture/fermeture des interrupteurs de côté bas 116B.

Le FPGA 146 est en outre configuré pour envoyer au circuit électronique de sélection 154, de manière sélective, soit une commande d'activation, soit une commande de désactivation du pilote de côté bas 152. Par défaut, le FPGA 146 est configuré pour envoyer la commande d'activation.

Le FPGA 146 est en outre configuré pour surveiller le microcontrôleur 144 et le CPLD 148. Lorsqu'une défaillance du microcontrôleur 144 ou du CPLD 148 est détectée, le FPGA 146 est configuré pour envoyer au pilote de côté bas 152 des commandes de fermeture des interrupteurs de côté bas 116B. En outre, dans le cas d'une défaillance du CPLD 148, le FPGA 146 est configuré pour envoyer au microcontrôleur 144 une demande de désactivation du pilote de côté haut 150.

Le FPGA 146 est en outre configuré pour recevoir des mesures de tensions V_{U}, V_{V}, V_{W}, V_{X}, V_{Y}, V_{Z} respectives des points milieu U, V, W, X, Y, Z et pour les comparer avec les commandes d'ouverture/fermeture des interrupteurs 116H, 116B afin de détecter une défaillance des pilotes 150, 152 ou des interrupteurs 116H, 116B. En complément ou à la place de la surveillance des tensions des points milieu tensions V_{U}, V_{V}, V_{W}, V_{X}, V_{Y}, V_{Z} des points milieu U, V, W, X, Y, Z, les pilotes 150, 152 peuvent être configurés pour s'auto-surveiller et, en cas de détection d'une défaillance, envoyer des messages de défaillance. Le pilote de côté haut 150 et le pilote de côté bas 152 sont configurés pour envoyer le message de défaillance au FPGA 146. Lorsqu'une défaillance est détectée, le FPGA 146 est configuré pour envoyer au pilote de côté bas 152 des commandes de fermeture des interrupteurs de côté bas 116B et pour envoyer au microcontrôleur 144 une demande de désactivation du pilote de côté haut 150. Lorsque le FPGA 146 détermine que la fermeture des interrupteurs de côté bas 116B n'est pas adapté, par exemple parce que l'un des interrupteurs de côté bas 116B est bloqué à l'état ouvert, le FPGA 146 est configuré pour envoyer au CPLD 148 des commandes de fermeture des interrupteurs de côté haut 116H, pour envoyer au circuit électronique de sélection 154 une commande de désactivation du pilote de côté bas 152 et pour envoyer au microcontrôleur 144 une demande de désactivation du pilote de côté bas 152.

Il sera apprécié que, dans l'exemple décrit, le FPGA 146 est directement connecté au pilote de côté bas 152 pour envoyer les commandes d'ouverture/fermeture, c'est-à-dire que cette connexion ne passe par aucun circuit électronique logique susceptible d'interrompre la transmission des commandes et donc d'empêcher aux commande émises par le FPGA 146 d'arriver au pilote de côté bas 152.

### CPLD 148

Le CPLD 148 est configuré pour transférer les commandes d'ouverture/fermeture des interrupteurs de côté haut 116H reçues du FPGA 146 jusqu'au pilote de côté haut 150.

Il sera apprécié que, dans l'exemple décrit, le CPLD 148 est directement connecté au pilote de côté haut 150 pour envoyer les commandes d'ouverture/fermeture, c'est-à-dire que cette connexion ne passe par aucun circuit électronique logique susceptible d'interrompre la transmission des commandes et donc d'empêcher aux commande émises par le CPLD 148 d'arriver au pilote de côté haut 150.

Le CPLD 148 est en outre configuré pour envoyer au circuit électronique de sélection 154, de manière sélective, soit une commande d'activation, soit une commande de désactivation du pilote de côté bas 152. Par défaut, le CPLD 148 est configuré pour envoyer la commande d'activation.

Le CPLD 148 est en outre configuré pour surveiller le FPGA 146. Lorsqu'une défaillance du FPGA 146 est détectée, le CPLD est configuré, d'une part, pour envoyer au pilote de côté haut 150 des commandes de fermeture des interrupteurs de côté haut 116H et, d'autre part, pour envoyer au circuit électronique de sélection 154 la commande de désactivation.

### Circuit électronique de sélection 154

Le circuit électronique de sélection 154 est configuré pour recevoir les commandes d'activation/désactivation issues du microcontrôleur 144, du FPGA 146 et du CPLD 148. Le circuit électronique de sélection 154 est en outre configuré pour transférer au pilote de côté bas 152 la commande reçue de la part d'au moins deux des trois circuits électroniques 144, 146, 148 précédents. Dans l'exemple décrit, cela revient à transférer la commande reçue majoritairement de la part des circuits électroniques 144, 146, 148 précédents.

De manière générale, lorsqu'il y a N circuits électroniques envoyant des commandes d'activation/désactivation du pilote de côté bas 152, le circuit électronique de sélection 154 est configuré pour transférer au pilote de côté bas 152 la commande de désactivation si des commandes de désactivation ont été reçues de la part d'au moins M circuits électroniques, M étant supérieur à N/2. De préférence, M est en outre inférieur ou égal à N-1. Le circuit électronique de sélection 154 est configuré pour, dans le cas contraire, transférer au pilote de côté bas 152 une commande d'activation.

Dans un mode de réalisation, M est égal à la majorité des N circuits électroniques, c'est-à-dire que M est égal au premier entier supérieur à N/2. Par exemple, si N est égal à 4, M est égal à 3. Si N est égal à 5, M est aussi égal à 3. Ce mode de réalisation permet de remédier à la défaillance d'une minorité des N circuits électroniques, c'est-à-dire à la défaillance d'un nombre de circuits électroniques compris entre un et le premier entier inférieur à N/2. Par exemple, si N est égal à 6, ce mode de réalisation permet de remédier à la défaillance de un à deux circuits électroniques. Si N est égal à 7, ce mode de réalisation permet de remédier à la défaillance de un à trois circuits électroniques.

Dans un autre mode de réalisation, M est égal à N-1. Par exemple, si N est égal à 4, M est égal à 3. Si N est égal à 5, M est égal à 4. Ce mode de réalisation permet de remédier à la défaillance d'un seul des N circuits électroniques.

Dans l'exemple décrit, N est égal à 3, de sorte que les deux modes de réalisation précédents sont équivalents et le circuit électronique de sélection 154 est ainsi configuré pour transférer au pilote de côté bas 152 la commande de désactivation si des commandes de désactivation ont été reçues de la part d'au moins deux circuits électroniques.

### Commandes d'activation/désactivation

Les commandes d'activation/désactivation décrites précédemment sont par exemple réalisées sous la forme d'un signal binaire pouvant prendre deux valeurs indiquant respectivement une activation et une désactivation. Par exemple, la valeur binaire « 0 » indique une activation, tandis que la valeur binaire « 1 » indique une désactivation.

### Pilote de côté haut 150

Lorsqu'il reçoit la commande d'activation de la part du microcontrôleur 144, le pilote de côté haut 150 est configuré pour piloter les interrupteurs de côté haut 116H suivant les commandes d'ouverture/fermeture des interrupteurs de côté haut 116H reçues du CPLD 148. Plus précisément, les commandes d'ouverture/fermeture des interrupteurs de côté haut 116H envoyées par le CPLD 148 sont envoyées entre un potentiel nul et un potentiel bas, généralement inférieur à 10V, par exemple 5V. Le pilote de côté haut 150 est configuré pour appliquer aux interrupteurs de côté haut 116H les commandes reçues, mais cette fois entre un potentiel négatif et un potentiel haut, généralement supérieur à 10V, par exemple compris entre 12V et 22V.

Lorsqu'il reçoit la commande de désactivation de la part du microcontrôleur 144, le pilote de côté haut 150 est configuré pour ignorer les commandes d'ouverture/fermeture des interrupteurs de côté haut 116H reçues du CPLD 148 et pour fournir à chacun des interrupteurs de côté haut 116H un signal prédéterminé d'ouverture ou de fermeture des interrupteurs de côté haut 116H. Dans l'exemple décrit où les interrupteurs de côté haut 116H sont « normalement ouverts », le pilote de côté haut 150 recevant la commande de désactivation est ainsi configuré pour fournir une tension nulle aux interrupteurs de côté haut 116H au moyen par exemple de dispositifs de tirage (non représentés), vers le haut (appelés *« pull-up »* en anglais) ou bien vers le bas (appelés *« pull-down »* en anglais).

Le pilote de côté haut comporte par exemple un pilote élémentaire de côté haut pour chaque interrupteur de côté haut 116H, soit six pilotes élémentaires de côté haut dans l'exemple décrit.

### Pilote de côté bas 152

Lorsqu'il reçoit la commande d'activation de la part du circuit électronique de sélection 154, le pilote de côté bas 152 est configuré pour piloter les interrupteurs de côté bas 116B suivant les commandes d'ouverture/fermeture des interrupteurs de côté bas 116B reçues du FPGA 146. Plus précisément, les commandes d'ouverture/fermeture des interrupteurs de côté bas 116B envoyées par le FPGA 146 sont envoyées entre un potentiel nul et à un potentiel bas, généralement inférieur à 10V, par exemple 5V. Le pilote de côté bas 152 est configuré pour appliquer aux interrupteurs de côté bas 116B les commandes reçues, mais cette fois entre un potentiel négatif et un potentiel haut, généralement supérieur à 10V, par exemple compris entre 12V et 22V.

Lorsqu'il reçoit la commande de désactivation de la part du circuit électronique de sélection 154, le pilote de côté bas 152 est configuré pour ignorer les commandes d'ouverture/fermeture des interrupteurs de côté bas 116B reçues du FPGA 146 et pour fournir à chacun des interrupteurs de côté bas 116B un signal prédéterminé d'ouverture ou de fermeture des interrupteurs de côté bas 116H. Dans l'exemple décrit où les interrupteurs de côté bas 116B sont « normalement ouverts », le pilote de côté bas 152 recevant la commande de désactivation est ainsi configuré pour fournir une tension nulle aux interrupteurs de côté bas 116B au moyen par exemple de dispositifs de tirage (non représentés).

Le pilote de côté bas 152 comporte par exemple un pilote élémentaire de côté bas pour chaque interrupteur de côté haut 116H, soit six pilotes élémentaires de côté bas dans l'exemple décrit.

### Dispositifs de tirage 156, 158, 160, 162, 163

Le dispositif de tirage 156 est associé au microcontrôleur 144 et est configuré pour, lorsque le microcontrôleur 144 n'envoie au pilote de côté haut 150 ni commande d'activation ni commande de désactivation, envoyer au pilote de côté haut 150 une commande de désactivation à la place du microcontrôleur 144.

Le dispositif de tirage 158 est associé au microcontrôleur 144 et configuré pour, lorsque le microcontrôleur 144 n'envoie au circuit électronique de sélection 154 ni commande d'activation ni commande de désactivation, envoyer au circuit électronique de sélection 154 une commande d'activation à la place du microcontrôleur 144.

Le dispositif de tirage 160 est associé au CPLD 148 et configuré pour, lorsque le CPLD 148 n'envoie au circuit électronique de sélection 154 ni commande d'activation ni commande de désactivation, envoyer au circuit électronique de sélection 154 une commande d'activation à la place du CPLD 148.

Le dispositif de tirage 162 est associé au FPGA 146 et configuré pour, lorsque le FPGA 146 n'envoie au circuit électronique de sélection 154 ni commande d'activation ni commande de désactivation, envoyer au circuit électronique de sélection 154 une commande d'activation à la place du FPGA 146.

Le dispositif de tirage 163 est associé au circuit électronique de sélection 154 et configuré pour, lorsque le circuit électronique de sélection 154 n'envoie au pilote de côté bas 152 ni commande d'activation ni commande de désactivation, envoyer au pilote de côté bas 152 une commande de désactivation à la place du circuit électronique de sélection 154.

Les dispositifs de tirage 156, 158, 160, 162, 163 sont par exemple des dispositifs de tirage vers le haut ou bien vers le bas, suivant les valeurs logiques représentant respectivement une activation et une désactivation

### Fonctionnement normal

En fonctionnement normal, le microcontrôleur 144, le FPGA 146 et le CPLD 148 envoient au circuit électronique de sélection 154 des commandes d'activation du pilote de côté bas 152.

Le circuit électronique de sélection 154 transfère au pilote de côté bas 152 la commande majoritaire, c'est-à-dire la commande d'activation.

En parallèle, le microcontrôleur 144 détermine des commandes d'ouverture/fermeture des interrupteurs de côté haut 116H et des commandes d'ouverture/fermeture des interrupteurs de côté bas 116B à partir, entre autre, de la consigne de couple C, de la mesure de la position du moteur, de mesures de courants dans les phases et de la mesure de tension de la batterie 108.

Le microcontrôleur 144 envoie les commandes d'ouverture/fermeture des interrupteurs 116H, 116B au FPGA 146.

Le FPGA 146 met en forme les commandes d'ouverture/fermeture des interrupteurs 116H, 116B. Le FPGA 146 envoie alors les commandes d'ouverture/fermeture des interrupteurs de côté haut 116H au CPLD 148 qui les transfère au pilote de côté haut 150. Le FPGA 146 envoie en outre les commandes d'ouverture/fermeture des interrupteurs de côté bas 116B au pilote de côté bas 152.

Les pilotes 150, 152 appliquent les commandes d'ouverture/fermeture à leurs interrupteurs 116H, 116B respectifs.

### Défaillance du microcontrôleur 144

Le FPGA 146 détecte cette défaillance et, en réponse, envoie au CPLD 148 des commandes d'ouverture des interrupteurs de côté haut 116H. Le CPLD 148 transfère au pilote de côté haut 150 les commandes d'ouverture des interrupteurs de côté haut 116H. Si la défaillance du microcontrôleur 144 entraîne que celui-ci envoie au pilote de côté haut 150 une commande d'activation, le pilote de côté haut 150 est activé et peut appliquer les commandes d'ouverture des interrupteurs de côté haut 116H. Si la défaillance du microcontrôleur 144 entraîne que celui-ci envoie au pilote de côté haut 150 une commande de désactivation, le pilote de côté haut 150 est désactivé et ignore donc des commandes, mais ouvre tout de même les interrupteurs de côté haut 116H. Si la défaillance du microcontrôleur 144 entraîne que celui-ci n'envoie aucune commande d'activation ou de désactivation (cas par exemple où le microcontrôleur 144 n'est plus alimenté), le dispositif de tirage 156 envoie au pilote de côté haut 150 une commande d'activation, de sorte que le pilote de côté haut 150 est activé et peut appliquer les commandes d'ouverture des interrupteurs de côté haut 116H.

En outre, en réponse à la détection de la défaillance, le FPGA 146 envoie au pilote de côté bas 152 des commandes de fermeture des interrupteurs de côté bas 116B. Le FPGA 146 et le CPLD 148 continuent d'envoyer au circuit électronique de sélection 154 des commandes d'activation du pilote de côté bas 152, de sorte que la commande majoritaire reçue par le circuit électronique de sélection 154 est la commande d'activation, quel que soit la commande envoyée par le microcontrôleur 144. Ainsi, le pilote de côté bas 152 reste activé et peut appliquer les commandes de fermeture des interrupteurs de côté bas 116B.

Le moteur électrique se trouve alors dans un état sécurisé : les interrupteurs de côté bas 116B sont tous fermés et les interrupteurs de côté haut 116H sont tous ouverts.

### Défaillance du FPGA 146

Le microcontrôleur 144 détecte cette défaillance et, en réponse, envoie au circuit électronique de sélection 154 une commande de désactivation. Le CPLD 148 détecte également cette défaillance et, en réponse, envoie également au circuit électronique de sélection 154 une commande de désactivation. Ainsi, la commande majoritaire transférée par le circuit électronique de sélection 154 est la commande de désactivation, quel que soit la commande envoyée par le FPGA 146, de sorte que le pilote de côté bas 152 est désactivé et, de ce fait, ignore les commandes d'ouverture/fermeture des interrupteurs de côté bas 116B provenant du FPGA 146 et ouvre les interrupteurs de côté bas 116B.

Par ailleurs, en réponse à la détection de cette défaillance, le CPLD 148 envoie au pilote de côté haut 150 des commandes de fermeture des interrupteurs de côté haut 116H. Comme le microcontrôleur 144 continue d'envoyer au pilote de côté haut 150 une commande d'activation, le pilote de côté haut 150 applique aux interrupteurs de côté haut 116H les commandes de fermeture reçues du CPLD 148.

Le moteur électrique se trouve alors dans un état sécurisé : les interrupteurs de côté haut 116H sont tous fermés et les interrupteurs de côté bas 116B sont tous ouverts.

### Défaillance du CPLD 148

Le FPGA 146 détecte cette défaillance et, en réponse, envoie au microcontrôleur 144 une demande de désactivation du pilote de côté haut 150. En réponse à cette demande, le microcontrôleur 144 envoie au pilote de côté haut 150 une commande de désactivation, de sorte que le pilote de côté haut 150 est désactivé et, de ce fait, ignore les commandes d'ouverture/fermeture des interrupteurs de côté haut 150 reçues du CPLD 148 et ouvre les interrupteurs de côté haut 150.

Par ailleurs, en réponse à la détection de la défaillance, le FPGA 146 envoie au pilote de côté bas 152 des commandes de fermeture des interrupteurs de côté bas 116B. Comme le microcontrôleur 144 et le FPGA 146 continuent d'envoyer au circuit électronique de sélection 154 des commandes d'activation, la commande majoritaire transférée par le circuit électronique de sélection 154 est la commande d'activation, quel que soit la commande envoyée par le CPLD 148, de sorte que le pilote de côté bas 152 est activé et, de ce fait, applique les commandes de fermeture des interrupteurs de côté bas 116B provenant du FPGA 146.

Le moteur électrique se trouve alors dans un état sécurisé : les interrupteurs de côté haut 116H sont tous ouverts et les interrupteurs de côté bas 116B sont tous fermés.

### Défaillance du pilote de côté haut 150, du pilote de côté bas 152 ou de l'un des interrupteurs 116H, 116B

Le FPGA 146 détecte cette défaillance et, en réponse, essaie d'ouvrir les interrupteurs de côté haut 116H et fermer les interrupteurs de côté bas, si cela est adapté.

Pour cela, le FPGA 146 envoie au microcontrôleur 144 une demande de désactivation du pilote de côté haut 150. En réponse à cette demande, le microcontrôleur 144 envoie une commande de désactivation du pilote de côté haut 150, de sorte que le pilote de côté haut 150 est désactivé et ouvre les interrupteurs de côté hauts 116H.

Par ailleurs, le FPGA 146 envoie au pilote de côté bas 152 des commandes de fermeture des interrupteurs de côté bas 116B. Comme le microcontrôleur 144, le FPGA 146 et le CPLD 148 continuent d'envoyer au circuit électronique de sélection 154 des commandes d'activation du pilote de côté bas 152, le circuit électronique de sélection 154 transfère au pilote de côté bas 152 la commande d'activation, se sorte que le pilote de côté bas 152 est activé et peut appliquer les commandes de fermeture des interrupteurs de côté bas 116B en provenance du FPGA 146.

Le moteur électrique se trouve alors dans un état sécurisé : les interrupteurs de côté haut 116H sont tous ouverts et les interrupteurs de côté bas 116B sont tous fermés.

Si le scénario précédent n'est pas possible, par exemple si l'un des interrupteurs de côté haut 126H est bloqué à l'état fermé ou bien si l'un des interrupteurs de côté bas 126B est bloqué à l'état ouvert, le FPGA 146 envoie au circuit électronique de sélection 154 une commande de désactivation du pilote de côté bas 152 et envoie au microcontrôleur 144 une demande de désactivation du pilote de côté bas. En réponse, le microcontrôleur 144 envoie également au comparateur une commande de désactivation du pilote de côté bas 152. Ainsi, la commande majoritaire transférée par le circuit électronique de sélection 154 est la commande de désactivation, de sorte que le pilote de côté bas 152 est désactivé et, de ce fait, ouvre les interrupteurs de côté bas 116B.

Par ailleurs, le FPGA envoie au CPLD 148 des commandes de fermeture des interrupteurs de côté haut 116H et le CPLD les transfère au pilote de côté haut 150. Comme le microcontrôleur 144 continue d'envoyer au pilote de côté haut 150 une commande d'activation, le pilote de côté haut 150 est activé et, de ce fait, applique les commandes de fermeture des interrupteurs de côté haut 116H en provenance du CPLD 148.

Le moteur électrique se trouve alors dans un état sécurisé : les interrupteurs de côté haut 116H sont tous fermés et les interrupteurs de côté bas 116B sont tous ouverts.

### Défaillance du circuit électronique de sélection 154

Si la défaillance entraîne que le circuit électronique de sélection 154 envoie au pilote de côté bas 152 une commande d'activation, le dispositif de commande 134 peut continuer à fonctionner normalement.

Si la défaillance entraîne que le circuit électronique de sélection 154 envoie au pilote de côté bas 152 une commande de désactivation, le FPGA 146 détecte cette défaillance par l'analyse des tensions des points milieu.

Le FPGA 146 envoie alors au CPLD 148 des commandes de fermeture des interrupteurs de côté haut 116H et le CPLD les transfère au pilote de côté haut 150. Comme le microcontrôleur 144 continue d'envoyer au pilote de côté haut 150 une commande d'activation, le pilote de côté haut 150 est activé et, de ce fait, applique les commandes de fermeture des interrupteurs de côté haut 116H en provenance du CPLD 148.

Le moteur électrique se trouve alors dans un état sécurisé : les interrupteurs de côté haut 116H sont tous fermés et les interrupteurs de côté bas 116B sont tous ouverts.

Si la défaillance entraîne que le circuit électronique de sélection 154 n'envoie au pilote de côté bas 152 ni commande d'activation ni commande de désactivation, le dispositif de tirage 163 associé au circuit électronique de sélection 154 prend le relai et envoie au pilote de côté bas 152 une commande de désactivation. Ainsi, on revient au cas de la défaillance du pilote de côté bas 152, qui est détectée par le FPGA 146, comme expliqué précédemment.

### Défaillance de la deuxième alimentation 140

Cette défaillance entraîne l'arrêt de l'alimentation du microcontrôleur 144, du CPLD 148 et du pilote de côté haut 150. Le pilote de côté haut 150 ne pilote donc plus les interrupteurs de côté haut 116H, mais, comme ces derniers sont «normalement ouvert », ils sont ouverts.

Par ailleurs, le FPGA 146 détecte la défaillance du microcontrôleur 144 et du CPLD 148 et, en réponse, envoie au pilote de côté bas 152 des commandes de fermeture des interrupteurs de côté bas 116B.

Le microcontrôleur 144 et le CPLD 148 n'envoient au circuit électronique de sélection 154 ni commande d'activation ni commande de désactivation, de sorte que leurs dispositifs de tirage 158, 160 respectifs prennent le relai et envoient au circuit électronique de sélection 154 des commande d'activation du pilote de côté bas 152. Comme en outre, le FPGA 146 continue d'envoyer au circuit électronique de sélection 154 une commande d'activation du pilote de côté bas 152, la commande majoritaire transférée par le circuit électronique de sélection 154 est la commande d'activation, de sorte que le pilote de côté bas 152 est activé et applique aux interrupteurs de côté bas 116B les commandes de fermeture provenant du FPGA 146.

Le moteur électrique se trouve alors dans un état sécurisé : les interrupteurs de côté haut 116H sont tous ouverts et les interrupteurs de côté bas 116B sont tous fermés.

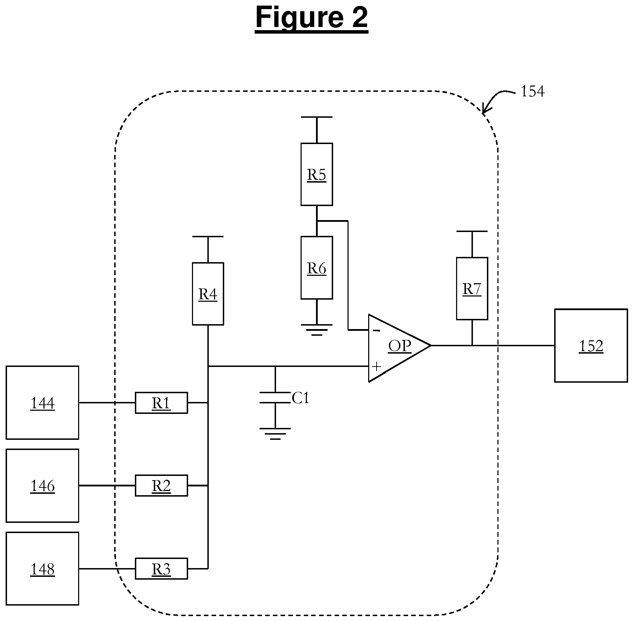

En référence à la figure 2, un exemple de réalisation du circuit électronique de sélection 154 est illustré.

Le circuit électronique de sélection comporte des résistances R1...R7, une capacité C1 et un amplificateur opérationnel OP, agencés tel que cela est représenté.

La présente invention n'est pas limitée au mode de réalisation décrit précédemment, mais est au contraire définie par les revendications qui suivent. Il sera en effet apparent à l'homme du métier que des modifications peuvent y être apportées.

En particulier, dans l'exemple décrit ci-dessus, les circuits électroniques 144, 146, 148 sont sous la forme de circuit intégrés numériques, mais ils pourraient être réalisés autrement.

En outre, le FPGA 146 pourrait être remplacé par un deuxième CPLD dédié à la commande du pilote de côté bas 152. Dans ce cas, le microcontrôleur 144 pourrait mettre en forme les commandes d'ouverture/fermeture pour fournir au CPLD 148 les commandes d'ouverture/fermeture des interrupteurs de côté haut 116H et au deuxième CPLD les commandes d'ouverture/fermeture des interrupteurs de côté bas 116B. Le deuxième CPLD participerait alors, au travers du circuit électronique de sélection 154, à l'activation/désactivation du pilote de côté bas 152.

En outre, il pourrait être prévu plus de trois circuits électroniques participant, au travers du circuit électronique de sélection 154, à l'activation/désactivation du pilote de côté bas 152.

En outre, le circuit électronique de sélection 154 pourrait être associé au pilote de côté haut 150, plutôt qu'au pilote de côté bas 152.

En outre, l'invention pourrait s'appliquer à d'autres formes d'onduleur. Par exemple, les trois bobines pourraient être connectées entre elles en étoile par des premières extrémités, et l'onduleur pourrait comporter trois bras de commutation respectivement associés aux trois autres extrémités des bobines.

En outre, les trois bobines pourraient être connectées entre elles en triangle, et l'onduleur pourrait comporter trois bras de commutation respectivement associés aux trois paires d'extrémités des bobines formant les trois pointes du triangle.

En outre, la machine électrique pourrait être d'un autre type qu'une machine électrique synchrone à aimants permanents.

En outre, chaque pilote pourrait être configuré pour ne fournir aucune tension lorsque désactivé. Dans ce cas, la tension fournie aux interrupteurs serait une tension flottante, à laquelle les interrupteurs seraient configurés pour répondre en se plaçant dans une position prédéterminée. Ainsi, la tension flottante est toujours considérée dans le cadre de la présente invention comme un signal de commande des interrupteurs.

En outre, les dispositifs de tirage 156, 158, 160, 162, 163 sont optionnels et pourraient être omis.

Par ailleurs, les termes utilisés dans les revendications ne doivent pas être compris comme limités aux éléments du mode de réalisation décrit précédemment, mais doivent au contraire être compris comme couvrant tous les éléments équivalents que l'homme du métier peut déduire à partir de ses connaissances générales.

## Revendications

1. Dispositif de commande (134) d'un onduleur (110) ayant des bras de commutation (102G, 102D, 104G, 104D, 106G, 106D) associés chacun à au moins une extrémité de bobine (102, 104, 106) d'une machine électrique, chaque bras de commutation (102G, 102D, 104G, 104D, 106G, 106D) présentant : un interrupteur de côté haut (116H) destiné à être sélectivement fermé pour connecter l'extrémité à une borne positive (+) d'une batterie (108) et ouvert pour déconnecter l'extrémité de la borne positive (+) de la batterie (108), et un interrupteur de côté bas (116B) destiné à être sélectivement fermé pour connecter l'extrémité à une borne négative (-) de la batterie (108) et ouvert pour déconnecter l'extrémité de la borne négative (-) de la batterie (108), le dispositif de commande (134) comportant :
- un premier pilote (152) configuré pour piloter au moins un premier interrupteur (116B) suivant des commandes d'ouverture/fermeture,
- N circuits électroniques (144, 146, 148), N étant supérieur ou égal à trois, l'un des circuits électroniques (146) étant configuré pour envoyer au premier pilote (152) les commandes d'ouverture/fermeture,
le dispositif de commande (134) étant **caractérisé en ce que** le premier pilote (152) est en outre configuré pour, en cas de réception d'une commande de désactivation, ignorer les commandes d'ouverture/fermeture reçues et fournir à chaque premier interrupteur (116B) un signal prédéterminé d'ouverture ou de fermeture,
**en ce que** chacun des N circuits électroniques est configuré pour envoyer une commande de désactivation du premier pilote (152),
et **en ce qu'**il comporte en outre :
- un circuit électronique de sélection (154) configuré pour :
- recevoir les commandes de désactivation envoyées par les N circuits électroniques (144, 146, 148), et
- si des commandes de désactivation ont été reçues de la part d'au moins M circuits électroniques (144, 146, 148), M étant supérieur à N/2, transférer au premier pilote (152) la commande de désactivation.

2. Dispositif de commande (134) selon la revendication 1, dans lequel M est égal à la majorité des N circuits électroniques (144, 146, 148).

3. Dispositif de commande (134) selon la revendication 1, dans lequel M est égal à N-1.

4. Dispositif de commande (134) selon l'une quelconque des revendications 1 à 3, dans lequel les circuits électroniques (144, 146, 148) sont en nombre impair.

5. Dispositif de commande (134) selon l'une quelconque des revendications 1 à 4, dans lequel les circuits électroniques (144, 146, 148) sont au nombre de trois.

6. Dispositif de commande (134) selon l'une quelconque des revendications 1 à 5, dans lequel le circuit électronique de sélection (154) est implémenté uniquement avec des composants analogiques.

7. Dispositif de commande (134) selon l'une quelconque des revendications 1 à 6, dans lequel le premier pilote (152) est configuré pour piloter plusieurs premiers interrupteurs (116B) qui sont tous d'un même premier côté parmi le côté haut et le côté bas.

8. Dispositif de commande (134) selon la revendication 7, dans lequel les premiers interrupteurs (116B) sont tous les interrupteurs (116B) d'un même premier côté parmi le côté haut et le côté bas.

9. Dispositif de commande (134) selon la revendication 7 ou 8, dans lequel le premier côté est le côté bas.

10. Dispositif de commande (134) selon l'une quelconque des revendications 7 à 9, comportant en outre un deuxième pilote configuré pour piloter des deuxièmes interrupteurs (116H) d'un deuxième côté parmi le côté haut et le côté bas, suivant des commandes d'ouverture/fermeture reçues et pour, en cas de réception d'une commande de désactivation, ignorer les commandes d'ouverture/fermeture reçues et fournir à chaque deuxième interrupteur (116H) un signal prédéterminé d'ouverture ou de fermeture.

11. Dispositif de commande (134) selon la revendication 10,
dans lequel un premier (144) des circuits électroniques (144, 146, 148) est configuré pour surveiller un deuxième (146) des circuits électroniques (144, 146, 148) et, lorsqu'une défaillance du deuxième circuit électronique (146) est détectée, pour envoyer au circuit électronique de sélection (154) une commande de désactivation du premier pilote (152),
dans lequel le deuxième circuit électronique (146) est configuré pour surveiller le premier circuit électronique (144) et un troisième (148) des circuits électroniques (144, 146, 148) et, lorsqu'une défaillance du premier circuit électronique (144) ou du troisième circuit électronique (148) est détectée, pour envoyer au premier pilote (152) des commandes de fermeture des premiers interrupteurs (116B) et, lorsqu'une défaillance du troisième circuit électronique (148) est détectée, pour envoyer en outre au premier circuit électronique (144) une demande de désactivation du deuxième pilote (150),
et dans lequel le troisième circuit électronique (148) est configuré pour surveiller le deuxième circuit électronique (146) et, lorsqu'une défaillance du deuxième circuit électronique (146) est détectée, pour, d'une part, envoyer au deuxième pilote (150) des commandes de fermeture des deuxièmes interrupteurs (116H) et, d'autre part, envoyer au circuit électronique de sélection (154) une commande de désactivation du premier pilote (152).

12. Dispositif de commande (134) selon la revendication 11,
dans lequel le premier circuit électronique (144) est configuré pour déterminer des commandes d'ouverture/fermeture des premiers interrupteurs (116B) et des commandes d'ouverture/fermeture des deuxièmes interrupteurs (116H) et pour envoyer au deuxième composant électronique (146) les commandes d'ouverture/fermeture des interrupteurs (116H, 116B) déterminées,
dans lequel le deuxième circuit électronique (146) est configuré pour mettre en forme les commandes d'ouverture/fermeture des interrupteurs (116H, 116B), pour envoyer au troisième circuit électronique (148), après leur mise en forme, les commandes d'ouverture/fermeture des deuxièmes interrupteurs (116H) et pour envoyer au premier pilote (152), après leur mise en forme, les commandes d'ouverture/fermeture des premiers interrupteurs (116B),
et dans lequel le troisième circuit électronique (148) est configuré pour transférer les commandes d'ouverture/fermeture des deuxièmes interrupteurs (116H) reçues du deuxième circuit électronique (146) jusqu'au deuxième pilote (150).

13. Système électrique (100) comportant :
- une machine électrique comportant des bobines (102, 104, 106) présentant chacune deux extrémités,
- un onduleur (110) ayant des bras de commutation (102G, 102D, 104G, 104D, 106G, 106D) associés chacun à au moins une extrémité de bobine (102, 104, 106) de la machine électrique, chaque bras de commutation (102G, 102D, 104G, 104D, 106G, 106D) présentant : un interrupteur de côté haut (116H) destiné à être sélectivement fermé pour connecter l'extrémité à une borne positive (+) d'une batterie (108) et ouvert pour déconnecter l'extrémité de la borne positive (+) de la batterie (108), et un interrupteur de côté bas (116B) destiné à être sélectivement fermé pour connecter l'extrémité à une borne négative (-) de la batterie (108) et ouvert pour déconnecter l'extrémité de la borne négative (-) de la batterie (108),
- un dispositif de commande (134) de l'onduleur (110) selon l'une quelconque des revendications 1 à 12.

14. Système électrique (100) selon la revendication 13, dans lequel la machine électrique comporte trois bobines (102, 104, 106) et l'onduleur (110) comporte six bras de commutation (102G, 102D, 104G, 104D, 106G, 106D) respectivement associés aux six extrémités des bobines (102, 104, 106).

15. Système électrique selon la revendication 13, dans lequel la machine électrique comporte trois bobines connectées entre elles en étoile par des premières extrémités, et dans lequel l'onduleur comporte trois bras de commutation respectivement associés aux trois autres extrémités des bobines.

16. Système électrique selon la revendication 13, dans lequel la machine électrique comporte trois bobines connectées entre elles en triangle, et dans lequel l'onduleur comporte trois bras de commutation respectivement associés aux trois paires d'extrémités des bobines formant les trois pointes du triangle.

17. Système électrique (100) selon l'une quelconque des revendications 13 à 16, dans laquelle la machine électrique est une machine électrique synchrone à aimants permanents.

## Patentansprüche

1. Vorrichtung zur Steuerung (134) eines Wechselrichters (110), welcher Schaltarme (102G, 102D, 104G, 104D, 106G, 106D) aufweist, die jeweils wenigstens einem Ende einer Spule (102, 104, 106) einer elektrischen Maschine zugeordnet sind, wobei jeder Schaltarm (102G, 102D, 104G, 104D, 106G, 106D) aufweist: einen High-Side-Schalter (116H), der dazu bestimmt ist, selektiv geschlossen zu werden, um das Ende mit einem Pluspol (+) einer Batterie (108) zu verbinden, und geöffnet zu werden, um das Ende von dem Pluspol (+) der Batterie (108) zu trennen, und einen Low-Side-Schalter (116B), der dazu bestimmt ist, selektiv geschlossen zu werden, um das Ende mit einem Minuspol (-) der Batterie (108) zu verbinden, und geöffnet zu werden, um das Ende von dem Minuspol (-) der Batterie (108) zu trennen, wobei die Steuervorrichtung (134) umfasst:
- einen ersten Treiber (152), der dafür ausgelegt ist, wenigstens einen ersten Schalter (116B) gemäß Befehlen zum Öffnen/Schließen anzusteuern,
- N elektronische Schaltungen (144, 146, 148), wobei N größer oder gleich drei ist, wobei eine der elektronischen Schaltungen (146) dafür ausgelegt ist, die Befehle zum Öffnen/Schließen an den ersten Treiber (152) zu senden,
wobei die Steuervorrichtung (134) **dadurch gekennzeichnet ist, dass** der erste Treiber (152) außerdem dafür ausgelegt ist, im Falle eines Empfangs eines Deaktivierungsbefehls die empfangenen Befehle zum Öffnen/Schließen zu ignorieren und an jeden ersten Schalter (116B) ein vorbestimmtes Signal zum Öffnen oder zum Schließen zu liefern,
dadurch, dass jede der N elektronischen Schaltungen dafür ausgelegt ist, einen Befehl zur Deaktivierung des ersten Treibers (152) zu senden, und dadurch, dass sie außerdem umfasst:
- eine elektronische Auswahlschaltung (154), die dafür ausgelegt ist:
- die Deaktivierungsbefehle zu empfangen, die von den N elektronischen Schaltungen (144, 146, 148) gesendet wurden, und
- falls Deaktivierungsbefehle empfangen worden sind, die von mindestens M elektronischen Schaltungen (144, 146, 148) kommen, wobei M größer als N/2 ist, den Deaktivierungsbefehl an den ersten Treiber (152) zu übermitteln.

2. Steuervorrichtung (134) nach Anspruch 1, wobei M gleich der Mehrheit der N elektronischen Schaltungen (144, 146, 148) ist.

3. Steuervorrichtung (134) nach Anspruch 1, wobei M gleich N-1 ist.

4. Steuervorrichtung (134) nach einem der Ansprüche 1 bis 3, wobei die Anzahl der elektronischen Schaltungen (144, 146, 148) ungerade ist.

5. Steuervorrichtung (134) nach einem der Ansprüche 1 bis 4, wobei die Anzahl der elektronischen Schaltungen (144, 146, 148) drei ist.

6. Steuervorrichtung (134) nach einem der Ansprüche 1 bis 5, wobei die elektronische Auswahlschaltung (154) ausschließlich mit analogen Komponenten implementiert ist.

7. Steuervorrichtung (134) nach einem der Ansprüche 1 bis 6, wobei der erste Treiber (152) dafür ausgelegt ist, mehrere erste Schalter (116B) anzusteuern, welche alle Schalter einer ersten Seite von der High-Side und der Lowe-Side sind.

8. Steuervorrichtung (134) nach Anspruch 7, wobei die ersten Schalter (116B) alle Schalter (116B) einer ersten Seite von der High-Side und der Lowe-Side sind.

9. Steuervorrichtung (134) nach Anspruch 7 oder 8, wobei die erste Seite die Low-Side ist.

10. Steuervorrichtung (134) nach einem der Ansprüche 7 bis 9, welche außerdem einen zweiten Treiber umfasst, der dafür ausgelegt ist, zweite Schalter (116H) einer zweiten Seite von der High-Side und der Lowe-Side gemäß empfangenen Befehlen zum Öffnen/Schließen anzusteuern und im Falle eines Empfangs eines Deaktivierungsbefehls die empfangenen Befehle zum Öffnen/Schließen zu ignorieren und an jeden zweiten Schalter (116H) ein vorbestimmtes Signal zum Öffnen oder zum Schließen zu liefern.

11. Steuervorrichtung (134) nach Anspruch 10,
wobei eine erste (144) der elektronischen Schaltungen (144, 146, 148) dafür ausgelegt ist, eine zweite (146) der elektronischen Schaltungen (144, 146, 148) zu überwachen, und wenn ein Ausfall der zweiten elektronischen Schaltung (146) erkannt wird, an die elektronische Auswahlschaltung (154) einen Befehl zur Deaktivierung des ersten Treibers (152) zu senden, wobei die zweite elektronische Schaltung (146) dafür ausgelegt ist, die erste elektronische Schaltung (144) und eine dritte (148) der elektronischen Schaltungen (144, 146, 148) zu überwachen, und wenn ein Ausfall der ersten elektronischen Schaltung (144) oder der dritten elektronischen Schaltung (148) erkannt wird, an den ersten Treiber (152) Befehle zum Schließen der ersten Schalter (116B) zu senden, und wenn ein Ausfall der dritten elektronischen Schaltung (148) erkannt wird, außerdem an die erste elektronische Schaltung (144) eine Anforderung zur Deaktivierung des zweiten Treibers (150) zu senden,
und wobei die dritte elektronische Schaltung (148) dafür ausgelegt ist, die zweite elektronische Schaltung (146) zu überwachen, und wenn ein Ausfall der zweiten elektronischen Schaltung (146) erkannt wird, einerseits an den zweiten Treiber (150) Befehle zum Schließen der zweiten Schalter (116H) zu senden und andererseits an die elektronische Auswahlschaltung (154) einen Befehl zur Deaktivierung des ersten Treibers (152) zu senden.

12. Steuervorrichtung (134) nach Anspruch 11,
wobei die erste elektronische Schaltung (144) dafür ausgelegt ist, Befehle zum Öffnen/Schließen der ersten Schalter (116B) und Befehle zum Öffnen/Schließen der zweiten Schalter (116H) zu bestimmen und an die zweite elektronische Komponente (146) die bestimmten Befehle zum Öffnen/Schließen der Schalter (116H, 116B) zu senden,
wobei die zweite elektronische Schaltung (146) dafür ausgelegt ist, die Befehle zum Öffnen/Schließen der Schalter (116H, 116B) zu formen, an die dritte elektronische Schaltung (148) die Befehle, nach ihrer Formung, zum Öffnen/Schließen der zweiten Schalter (116H) zu senden und an den ersten Treiber (152) die Befehle, nach ihrer Formung, zum Öffnen/Schließen der ersten Schalter (116B) zu senden,
und wobei die dritte elektronische Schaltung (148) dafür ausgelegt ist, die von der zweiten elektronischen Schaltung (146) empfangenen Befehle zum Öffnen/Schließen der zweiten Schalter (116H) an den zweiten Treiber (150) zu übermitteln.

13. Elektrisches System (100), welches umfasst:
- eine elektrische Maschine, welche Spulen (102, 104, 106) umfasst, die jeweils zwei Enden aufweisen,
- einen Wechselrichter (110), welcher Schaltarme (102G, 102D, 104G, 104D, 106G, 106D) aufweist, die jeweils wenigstens einem Ende einer Spule (102, 104, 106) der elektrischen Maschine zugeordnet sind, wobei jeder Schaltarm (102G, 102D, 104G, 104D, 106G, 106D) aufweist: einen High-Side-Schalter (116H), der dazu bestimmt ist, selektiv geschlossen zu werden, um das Ende mit einem Pluspol (+) einer Batterie (108) zu verbinden, und geöffnet zu werden, um das Ende von dem Pluspol (+) der Batterie (108) zu trennen, und einen Low-Side-Schalter (116B), der dazu bestimmt ist, selektiv geschlossen zu werden, um das Ende mit einem Minuspol (-) der Batterie (108) zu verbinden, und geöffnet zu werden, um das Ende von dem Minuspol (-) der Batterie (108) zu trennen,
- eine Vorrichtung zur Steuerung (134) des Wechselrichters (110) nach einem der Ansprüche 1 bis 12.

14. Elektrisches System (100) nach Anspruch 13, wobei die elektrische Maschine drei Spulen (102, 104, 106) umfasst und der Wechselrichter (110) sechs Schaltarme (102G, 102D, 104G, 104D, 106G, 106D) umfasst, die jeweils einem der sechs Enden der Spulen (102, 104, 106) zugeordnet sind.

15. Elektrisches System nach Anspruch 13, wobei die elektrische Maschine drei Spulen umfasst, die durch erste Enden in Sternschaltung miteinander verbunden sind, und wobei der Wechselrichter drei Schaltarme umfasst. die jeweils einem der drei anderen Enden der Spulen zugeordnet sind.

16. Elektrisches System nach Anspruch 13, wobei die elektrische Maschine drei Spulen umfasst, die in Dreieckschaltung miteinander verbunden sind, und wobei der Wechselrichter drei Schaltarme umfasst. die jeweils einem der drei Paare von Enden der Spulen zugeordnet sind, welche die drei Ecken des Dreiecks bilden.

17. Elektrisches System (100) nach einem der Ansprüche 13 bis 16, wobei die elektrische Maschine eine elektrische Permanentmagnet-Synchronmaschine ist.

## Claims

1. Control device (134) for controlling an inverter (110), which has switching arms (102G, 102D, 104G, 104D, 106G, 106D) that are each associated with at least one end of a coil (102, 104, 106) of an electric machine, each switching arm (102G, 102D, 104G, 104D, 106G, 106D) having: a high-side switch (116H), which is intended to be selectively closed so as to connect the end to a positive terminal (+) of a battery (108) and opened so as to disconnect the end from the positive terminal (+) of the battery (108), and a low-side switch (116B), which is intended to be selectively closed so as to connect the end to a negative terminal (-) of the battery (108) and opened so as to disconnect the end from the negative terminal (-) of the battery (108), the control device (134) including:
- a first driver (152), which is configured to drive at least one first switch (116B) in accordance with opening/closing commands,
- N electronic circuits (144, 146, 148), N being greater than or equal to three, one of the electronic circuits (146) being configured to send the opening/closing commands to the first driver (152),
the control device (134) being **characterized in that** the first driver (152) is further configured, if a deactivation command is received, to ignore the received opening/closing commands and to supply each first switch (116B) with a predetermined opening or closing signal,
and **in that** each one of the N electronic circuits is configured to send a command to deactivate the first driver (152),
and **in that** it further includes:
- an electronic selection circuit (154), which is configured to:
- receive the deactivation commands sent by the N electronic circuits (144, 146, 148), and,
- if deactivation commands have been received from at least M electronic circuits (144, 146, 148), M being greater than N/2, transfer the deactivation command to the first driver (152).

2. Control device (134) according to Claim 1, wherein M is equal to the majority of the N electronic circuits (144, 146, 148).

3. Control device (134) according to Claim 1, wherein M is equal to N-1.

4. Control device (134) according to any one of Claims 1 to 3, wherein there is an odd number of electronic circuits (144, 146, 148).

5. Control device (134) according to any one of Claims 1 to 4, wherein there are three electronic circuits (144, 146, 148).

6. Control device (134) according to any one of Claims 1 to 5, wherein the electronic selection circuit (154) is implemented with only analogue components.

7. Control device (134) according to any one of Claims 1 to 6, wherein the first driver (152) is configured to drive a plurality of first switches (116B), which are all on one and the same first side from among the high side and the low side.

8. Control device (134) according to Claim 7, wherein the first switches (116B) are all the switches (116B) on one and the same first side from among the high side and the low side.

9. Control device (134) according to Claim 7 or 8, wherein the first side is the low side.

10. Control device (134) according to any one of Claims 7 to 9, further including a second driver, which is configured to drive second switches (116H), on a second side from among the high side and the low side, in accordance with received opening/closing commands, and, if a deactivation command is received, to ignore the received opening/closing commands and to supply each second switch (116H) with a predetermined opening or closing signal.

11. Control device (134) according to Claim 10,
wherein a first one (144) of the electronic circuits (144, 146, 148) is configured to monitor a second one (146) of the electronic circuits (144, 146, 148) and, when a fault in the second electronic circuit (146) is detected, to send a command to deactivate the first driver (152) to the electronic selection circuit (154),
wherein the second electronic circuit (146) is configured to monitor the first electronic circuit (144) and a third one (148) of the electronic circuits (144, 146, 148) and, when a fault in the first electronic circuit (144) or the third electronic circuit (148) is detected, to send commands to close the first switches (116B) to the first driver (152) and, when a fault in the third electronic circuit (148) is detected, to additionally send a request to deactivate the second driver (150) to the first electronic circuit (144), and wherein the third electronic circuit (148) is configured to monitor the second electronic circuit (146) and, when a fault in the second electronic circuit (146) is detected, to send commands to close the second switches (116H) to the second driver (150) and also to send a command to deactivate the first driver (152) to the electronic selection circuit (154).

12. Control device (134) according to Claim 11,
wherein the first electronic circuit (144) is configured to determine commands to open/close the first switches (116B) and commands to open/close the second switches (116H) and to send the determined commands to open/close the switches (116H, 116B) to the second electronic component (146),
wherein the second electronic circuit (146) is configured to shape the commands to open/close the switches (116H, 116B), to send the commands to open/close the second switches (116H), after the shaping thereof, to the third electronic circuit (148) and to send the commands to open/close the first switches (116B), after the shaping thereof, to the first driver (152),
and wherein the third electronic circuit (148) is configured to transfer the commands to open/close the second switches (116H), received from the second electronic circuit (146), to the second driver (150) .

13. Electrical system (100) including:
- an electric machine, which includes coils (102, 104, 106) that each have two ends,
- an inverter (110), which has switching arms (102G, 102D, 104G, 104D, 106G, 106D) that are each associated with at least one end of a coil (102, 104, 106) of the electric machine, each switching arm (102G, 102D, 104G, 104D, 106G, 106D) having: a high-side switch (116H), which is intended to be selectively closed so as to connect the end to a positive terminal (+) of a battery (108) and opened so as to disconnect the end from the positive terminal (+) of the battery (108), and a low-side switch (116B), which is intended to be selectively closed so as to connect the end to a negative terminal (-) of the battery (108) and opened so as to disconnect the end from the negative terminal (-) of the battery (108),
- a control device (134) for controlling the inverter (110) according to any one of Claims 1 to 12.

14. Electrical system (100) according to Claim 13, wherein the electric machine includes three coils (102, 104, 106) and the inverter (110) includes six switching arms (102G, 102D, 104G, 104D, 106G, 106D), which are respectively associated with the six ends of the coils (102, 104, 106).

15. Electrical system according to Claim 13, wherein the electric machine includes three coils, which are star-connected at first ends, and wherein the inverter includes three switching arms, which are respectively associated with the three other ends of the coils.

16. Electrical system according to Claim 13, wherein the electric machine includes three delta-connected coils, and wherein the inverter includes three switching arms, which are respectively associated with the three pairs of ends of the coils that form the three points of the delta.

17. Electrical system (100) according to any one of Claims 13 to 16, wherein the electric machine is a permanent-magnet synchronous electric machine.
